# EUROPEAN PATENT APPLICATION

(11) **EP 1 494 322 A2**
(43) Date of publication of application: **05.01.2005**
(21) Application number: 04254020.3
(22) Date of filing: 02.07.2004
(51) Int. Cl.: H01R 13/633

(54) **Card connector assembly**

(30) Priority: 04.07.2003 JP 2003270974
(71) Applicant: Tyco Electronics AMP K.K., Kawasaki, Kanagawa 213-8535 (JP)
(72) Inventor: Toda, Shinsaku Tyco Electronics AMP K.K., Kawasaki-shi Kanagawa-ken 213-8535 (JP)
(74) Representative: Johnstone, Douglas Ian

(57) **Abstract**

A card connector assembly (1) including a frame (4), and an ejecting mechanism (6). The frame (4) has a card receiving opening (42) at a first end, and a connector portion with contacts at a second end. The ejecting mechanism (6) includes a slidable operating rod (40) and pressing knob (48) on one of its ends positioned at a side of the card receiving opening (42). A guide comprising a protrusion (66) with a taper (68) on one side thereof, is formed on the pressing knob (48) for guiding the card (16) into the card receiving opening (42). The assembly (1) enables smooth insertion of the card (16) into the card receiving opening (42), by preventing its front end from striking the card receiving opening (42), even if the card connector assembly (1) is miniaturized.

## Description

The present invention relates to a card connector assembly, which is built into personal computers and the like. Particularly, the present invention relates to a card connector assembly, which is built into smaller computers, such as lap top personal computers.

An ejecting mechanism is generally provided in a card connector assembly that receives PC cards of the PCMCIA (Personal Computer Memory Card International Association) standard. The ejecting mechanism ejects cards, which are inserted into the card connector assembly. Normally, the ejecting mechanism is attached to a lateral side portion of a frame that receives the card. The card, which is inserted in the frame, is ejected by pressing a pressing knob of the ejecting mechanism.

As this type of card connector assembly, there is known a conventional connector with an ejecting mechanism, as disclosed in Japanese Unexamined Patent Publication No. 2002-110286 (Figure 2). A pressing knob of the ejecting mechanism of this connector is provided at a lateral side portion of the frame, in the vicinity of a card receiving opening. A gap, which is equivalent to the plate thickness of the frame, exists between the pressing knob and the card receiving opening.

In the above known connector, the gap, which is at least equivalent to the plate thickness of the frame, exists between the card receiving opening and the pressing knob. Therefore, during insertion of the card, there are cases in which the front end of the card strikes the front end of the frame, thereby precluding smooth insertion of the card. In the case that the ejecting mechanism and the card receiving opening are separated, a guide, for guiding the card to be inserted, may be provided on a case that houses the card connector assembly. However, along with the miniaturization of cases, card connector assemblies are also being miniaturized. Therefore, there is a tendency for ejecting mechanisms and card receiving openings to be in close proximity to each other, which causes difficulties in provided guides on the cases.

The present invention has been developed in view of the above circumstances. It is an object of the present invention to provide a card connector assembly that enables smooth insertion of a card into a card receiving opening, by preventing the front end of the card from striking the card receiving opening during insertion, even if the card connector assembly is small.

The card connector assembly of the present invention comprises:
a frame;
a card receiving opening provided in the frame;
a connector portion, which is attached to the frame at the end thereof opposite that of the card receiving opening, for electrically connecting with a card, which is inserted into the frame;
an ejecting mechanism, which is attached to a lateral side of the frame, for ejecting the card, which is inserted into the frame; and
an operating rod, which is a part of the ejecting mechanism, that slides along the insertion/ejection direction of the card; wherein:
   a pressing knob is provided on the operating rod at the end thereof on the side of the card receiving opening; and
   a guide portion for guiding the card, which is inserted into the frame, toward the card receiving opening is formed on the pressing knob.

Note that a configuration may be adopted wherein:
the guide portion is positioned forward of a lateral side edge of the card receiving opening, and is a protrusion having a taper for guiding a leading corner of the card, provided on the pressing knob.

The card connector assembly of the present invention comprises an operating rod, which is a part of the ejecting mechanism, that slides along the insertion/ejection direction of the card. A pressing knob is provided on the operating rod at the end thereof on the side of the card receiving opening, and a guide portion for guiding the card, which is inserted into the frame, toward the card receiving opening is formed on the pressing knob. Therefore, smooth insertion of the card into the card receiving opening is enabled, by preventing the front end of the card from striking the card receiving opening during insertion. This configuration is applicable to a card connector assembly with a narrow gap between the ejecting mechanism and the card receiving opening, to which a guide is not capable of being provided on a case of a device, which the card connector assembly is built into. Therefore, the card connector assembly can be miniaturized.

Note that a configuration may be adopted wherein:
the guide portion is positioned forward of a lateral side edge of the card receiving opening, and is a protrusion having a taper for guiding a leading corner of the card, provided on the pressing knob. In this case, an inexpensive guide, having an extremely simple structure, can be effectively provided.

The invention will now be described by way of example only with reference to the accompanying drawings in which:
Figure 1 is a plan view showing a card connector assembly of the present invention.
Figure 2 shows the card connector of Figure 1, wherein Figure 2A is a front view, Figure 2B is a left side view, and Figure 2C is a right side view.
Figure 3 shows a frame assembly, which is utilized in the card connector assembly of Figure 1, wherein Figure 3A is a plan view, and Figure 3B is a front view.
Figure 4 shows the frame assembly of Figure 3, wherein Figure 4A is a right side view, and Figure 4B is a left side view.
Figure 5 is a partial magnified view of the vicinity of a card receiving opening of the card connector assembly.
Figure 6 is a partial magnified view, in which a pressing knob is further magnified.

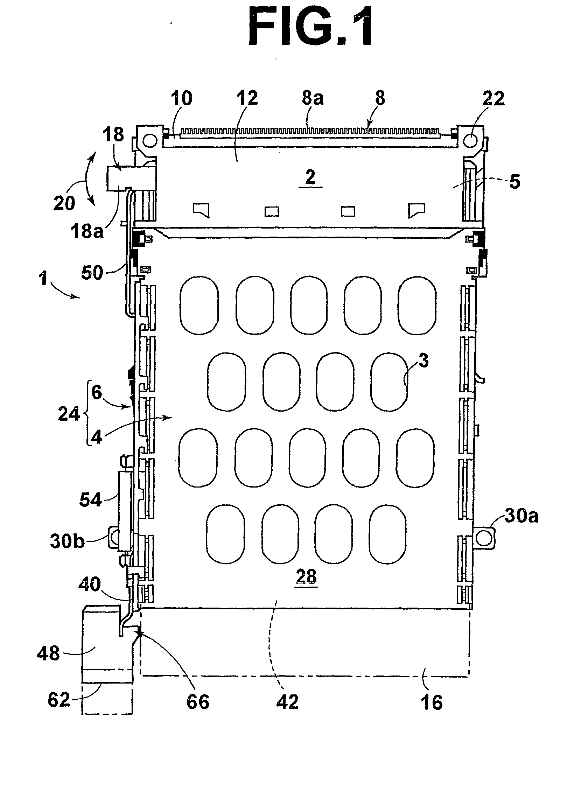

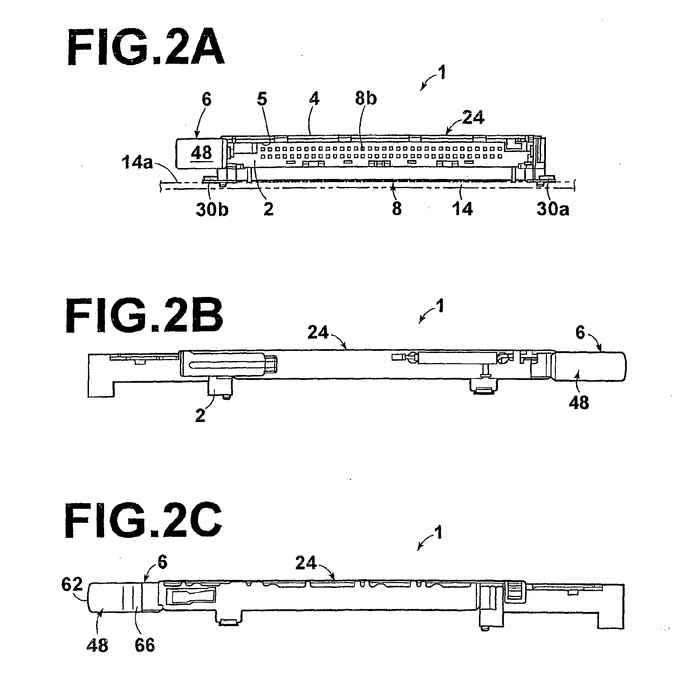

Hereinafter, an embodiment of the card connector assembly (hereinafter, simply referred to as "assembly") of the present invention will be described with reference to the attached drawings. Figure 1 is a plan view of the assembly of the present invention. Figure 2A is a front view, Figure 2B is a left side view, and Figure 2C is a right side view of the assembly of Figure 1. Hereinafter, a description will be given with reference to Figure 1, Figure 2A, Figure 2B, and Figure 2C.

The assembly 1 comprises a frame assembly 24 and a connector portion 2. The frame assembly comprises a frame 4 and an ejecting portion 6. A card 16, illustrated by broken lines in Figure 1, is shown in a state in which it is completely inserted into the assembly 1. The connector portion 2 comprises a substantially rectangular housing 12, which is molded from an insulative synthetic resin. A cavity 5, which is open toward the front, that is, the lower direction in Figure 1, is formed in the interior of the housing 12. The front end of the card 16 is to be received within the cavity 5. A great number of contacts 8 are implanted in a rear wall 10 of the connector portion 2. One end 8b (refer to Figure 2A) of each of the contacts 8 protrudes toward the interior of the housing 12, to electrically connect with corresponding contacts (not shown) of the card 16. The other end, that is, a tine 8a, of each of the contacts 8 protrudes toward the exterior from the rear wall 10, to be connected with a circuit board 14 (refer to Figure 2A).

A swinging bar 18 for ejecting the inserted card 16, is provided within the housing 12. The swinging bar 18 is swingable in the direction indicated by arrow 20 of Figure 1. A first end 18a of the swinging bar 18 is exposed. The other end of the swinging bar 18, which moves in the opposite direction as the first end 18a, is positioned within the housing 12. The swinging bar 18 is a well known structure, therefore a detailed description will be omitted here. Screw apertures 22, for screws that secure the housing 12 to the circuit board 14, are provided at both sides of the rear end of the housing 12.

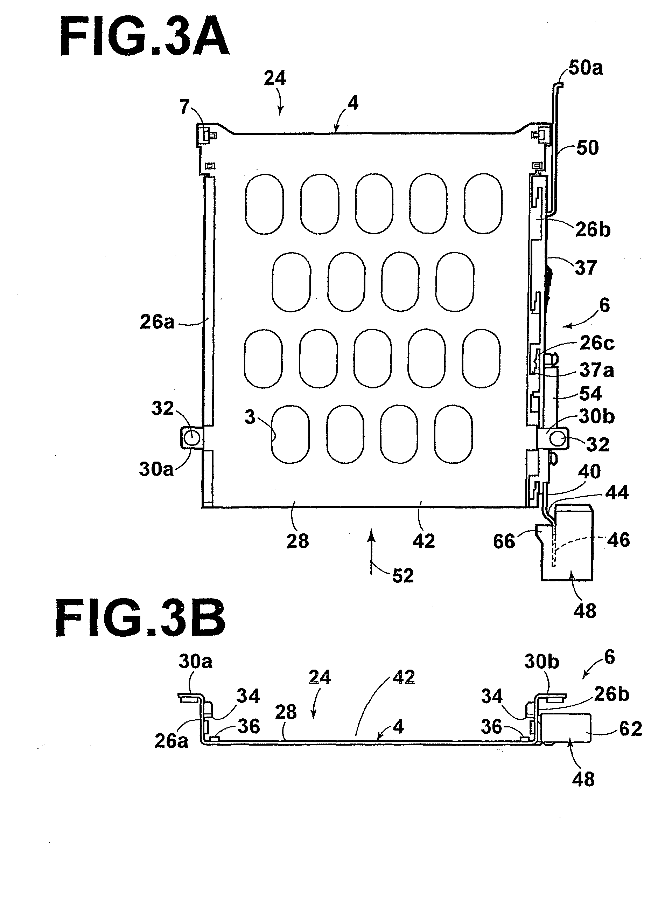

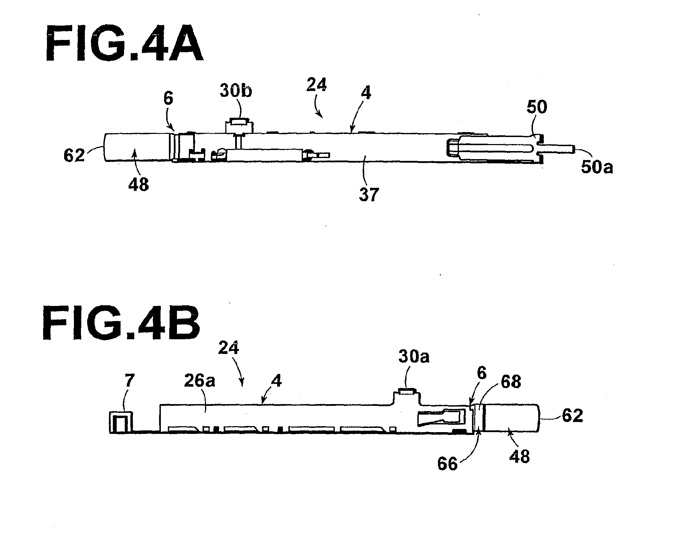

Next, the frame assembly 24 will be described with reference to Figure 3A, Figure 3B, Figure 4A, and Figure 4B. Figure 3A is a plan view, and Figure 3B is a front view of the frame assembly 24, which is utilized in the assembly 1 of Figure 1. Figure 4A is a right side view, and Figure 4B is a left side view of the frame assembly 24. Note that the frame assembly 24 is illustrated in an orientation which is opposite that of the frame assembly 24 as illustrated in Figure 1.

The frame 4 is formed into a C-shape in cross section, by punching and bending a single metal plate. A mounting portion 7, for mounting on the housing 12, is formed at both sides of the rear end (the upper end in Figure 3A) of the frame 4. The front end is a card receiving opening 41 that opens toward the front. Side walls 26 (26a and 26b) are formed by bending both sides, in the width direction, of a main surface 28 of the frame 4. Mounting tabs 30 (30a and 30b) , which are to be arranged on the upper surface 14a of the circuit board 14, are formed by bending the side walls 26. Mounting apertures 32, through which screws (not shown) for mounting the mounting tabs 30 to the circuit board 14 penetrate, are provided in the mounting tabs 30. Reference numeral 3 denotes apertures, which are formed in the main surface 28 to reduce the weight of the frame 4.

As illustrated in Figure 3B, guide ribs 34 are formed by cutting and bending the side walls 26. The guide ribs 34 are formed on the inner sides of the side walls 26, that is, on the side of the side walls 26a and 26b that face each other. In addition, guide ribs 36 are formed by cutting and bending the inner surface of the main surface 28, in the vicinity of the side walls 26. The guide ribs 34 and 36 are formed along the insertion/ejection direction of the card 16 at a plurality of locations. The guide ribs 34 and 36 serve to restrict vertical movement of the card 16 during insertion and ejection thereof. Guiding of the card 16 in the horizontal direction is performed by the side walls 26.

An ejecting mechanism 6 is attached to the side wall 26b of the frame 4. A metallic cover member 37, which is a part of the ejecting mechanism 6, is attached to the side wall 26b. The cover member 37 extends along the side wall 26b, and is C-shaped in cross section. The cover member 37 and the side wall 26b are attached to each other by the engagement of an engagement piece 37a, which is formed on the cover member 37, with an engagement piece 26c of the side wall 26b. A gap (not shown), which is slightly larger than the thickness of an operating rod 40, is formed between the cover member 37 and the side wall 26b. The operating rod 40 of the ejecting mechanism 6 is provided within the gap so that it is slidable in the same direction as the insertion/ejection direction of the card 16.

Next, the operating rod 40 will be described in further detail. The operating rod 40 is an elongated plate shaped member, which is formed by punching and bending a metal plate. The operating rod 40 extends within the gap, in the insertion/ejection direction of the card 16. A pressing knob mounting portion 46 is formed at the front end of the operating rod 40 toward the side of the card receiving opening 42, via a step 44. The pressing knob mounting portion 46 is formed so that it protrudes frontward, and is bent outwardly. A pressing knob 48 is mounted on the pressing knob mounting portion 46 either by press fitting or by overmolding. Meanwhile, a pressing bar 50, for pressing the first end 18a of the swinging bar 18 to eject the card 16, is attached to the rear end of the operating rod 40.

The ejecting mechanism 6, which includes the operating rod 40 and the pressing bar 50, operates as follows. When the pressing knob 48 is pressed along the insertion direction 52 of the card 16, the rear end 50a of the pressing bar 50, which is linked to the operating rod 40, presses and drives the swinging bar 18. The second end of the swinging bar 18 presses the front end of the card 16, which is within the housing 12, in the ejection direction, to eject the card 16. After the card 16 is ejected, a tension coil spring 54, which is interposed between the operating rod 40 and the frame 4, returns the operating rod 40 to its original position. The ejection mechanism may be of any form, as long as it operates as described above. For example, the ejecting mechanism may be a so called "push/push" type comprising a heart shaped cam, as disclosed in aforementioned Japanese Unexamined Patent Publication No. 2002-110286 or Japanese Unexamined Patent Publication No. 2001-291553. Alternatively, the ejecting mechanism may be of any other desired form.

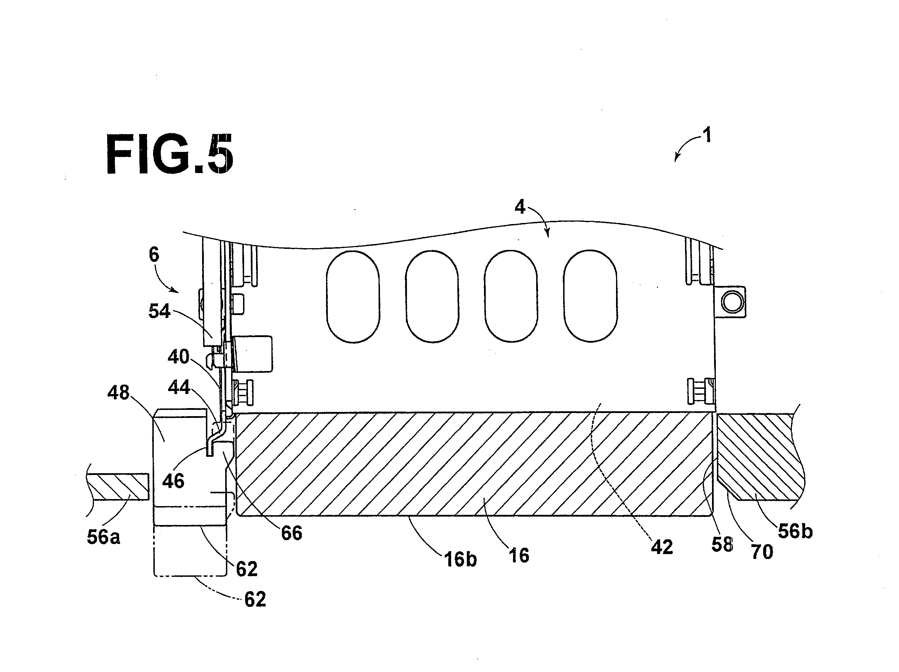

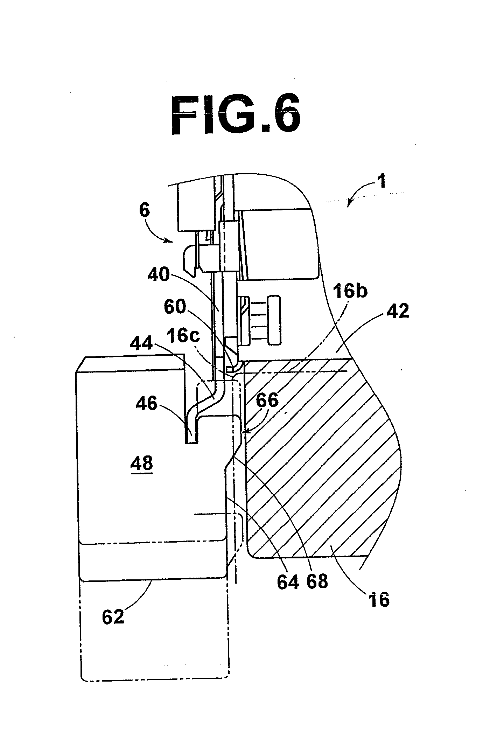

Next, the shape of the pressing knob 48, which is the characteristic feature of the present invention, will be described with reference to Figure 5 and Figure 6. Figure 5 is a partial magnified view of the vicinity of the card receiving opening 42 of the assembly 1. Figure 6 is a partial magnified view, in which the pressing knob 48 is further magnified. Note that in Figure 5 and Figure 6, the card 16 and a case 56 are illustrated as hatched portions. As illustrated in Figure 5, when the assembly 56 is mounted in the interior of the case 56 (56a and 56b), the card receiving opening 42 is positioned toward the interior of the case 56. The rear end 16b of the card 16, which is inserted in the assembly 1, protrudes slightly from the case 56.

The pressing knob 48 is capable of moving from a protruded position, illustrated by broken lines, to a pressed position, illustrated by solid lines. That is, when the pressing knob 48 is pressed from its protruded position, the card 16, which is inserted in the assembly 1, can be ejected. Here, attention should be focused on the fact that a single opening 58 is formed by the case 56a ad 56b, and the fact that the entire assembly 1 is housed within this opening 58. This structure is adopted in order to miniaturize devices, such as personal computers. Accordingly, the case 56 is not interposed between the frame 4 and the pressing knob 48.

Next, the shape of the pressing knob 48 of the ejecting mechanism 6 will be described in further detail, with reference to Figure 6. The card receiving opening 42 is formed at the front end of the frame 4. However, a lateral edge portion 60 is formed by bending the end of the frame 4 on the side of the ejecting mechanism 6. Accordingly, there is a risk that a leading corner 16c of the card 16 will strike the lateral edge portion 60, thereby preventing smooth insertion of the card 16 into the card receiving opening 42, if the card 16 is inserted in this state.

The pressing knob 48, which is utilized in the assembly 1 of the present invention, is substantially cuboid, and has a function of guiding the leading corner 16c of the card 16. The pressing knob 48 has a pressing surface 62, which is perpendicular to the insertion/ejection direction of the card 16. A protrusion 66 (guide) is formed on an inner surface 64 of the pressing knob 48. The protrusion 66 is positioned toward the front of the lateral edge portion 60 of the frame 4. A taper 68, for guiding the leading corner 16c of the card 16, is formed on the protrusion 66. The taper 68 is formed along the height direction of the pressing knob 48, as illustrated in Figure 4B. Accordingly, even if the card 16 is slightly misaligned in the vertical direction during insertion thereof, the leading edge 16c can be guided smoothly. Therefore, the card 16 is enabled to be smoothly inserted into the card receiving opening 42, without abutting the lateral edge portion 60.

A taper 70 may be formed on the case 56b, to guide the front end at the side of card 16 opposite that of the ejecting mechanism 6.

## Claims

1. A card connector assembly (1) comprising: a frame (4);
a card receiving opening (42) provided in the frame (4);
a connector portion (2), which is attached to the frame (4) at the end thereof opposite that of the card receiving opening (42), for electrically connecting with a card (16), which is inserted into the frame (4);
an ejecting mechanism (6), which is attached to a lateral side (26b) of the frame (4), for ejecting the card (16), which is inserted into the frame (4); and
an operating rod (40), which is a part of the ejecting mechanism (6), that slides along an insertion/ejection direction of the card (16); wherein:
a pressing knob (46) is provided on the operating rod (40) at an end thereof on a side of the card receiving opening (42); and
a guide portion (66,68) is formed on the pressing knob (46) for guiding the card (16), which is inserted into the frame (4), towards the card receiving opening (42).

2. A card connector assembly (1) as defined in claim 1, wherein:
the guide portion (68) is positioned forward of a lateral side edge of the card receiving opening (42), and is constituted by a protrusion (66) having a taper (68) provided on the pressing knob (48) for guiding a leading corner (16c) of the card (16).

3. A card connector assembly (1) as defined in claim 2, wherein:
the taper (68) is formed along a height direction of the pressing knob.
